(19) Europäisches Patentamt European Patent Office Office européen des brevets

(11) **EP 2 908 653 B1**

(12) **EUROPEAN PATENT SPECIFICATION**

(45) Date of publication and mention of the grant of the patent:
**07.09.2016 Bulletin 2016/36**

(21) Application number: **13766868.7**

(22) Date of filing: **17.09.2013**

(51) Int Cl.:
*A23D 9/00* (2006.01)        *H01B 3/20* (2006.01)

(86) International application number:
**PCT/US2013/060042**

(87) International publication number:
**WO 2014/062327 (24.04.2014 Gazette 2014/17)**

(54) **TRIGLYCERIDE BASED, LOW VISCOSITY, HIGH FLASH POINT DIELECTRIC FLUIDS**

TRIGLYCERIDBASIERTE NIEDRIGVISKOSE DIELEKTRISCHE FLÜSSIGKEITEN MIT HOHEM FLAMMPUNKT

FLUIDES DIÉLECTRIQUES À BASE DE TRIGLYCÉRIDES, CARACTÉRISÉS PAR UNE FAIBLE VISCOSITÉ ET UN POINT D'ÉCLAIR ÉLEVÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2012 PCT/IN2012/000691**

(43) Date of publication of application:
**26.08.2015 Bulletin 2015/35**

(73) Proprietor: **Dow Global Technologies LLC Midland, MI 48674 (US)**

(72) Inventors:
• **NAIR, Sreejit, A.**
  **Mumbai 400067 (IN)**
• **GUPTE, Kaustubh, S.**
  **Mumbai 400081 (IN)**
• **LIN, Thomas, S.**
  **Whippany, NJ 07981 (US)**
• **COGEN, Jeffrey, M.**
  **Flemington, NJ 08822 (US)**

• **CHAUDHARY, Bharat, I.**
  **Princeton, NJ 08540 (US)**
• **FLORY, Anny, L.**
  **Philadelphia, PA 19130 (US)**

(74) Representative: **Boult Wade Tennant**
  **Verulam Gardens**
  **70 Gray's Inn Road**
  **London WC1X 8BT (GB)**

(56) References cited:
  **EP-A1- 2 402 956        WO-A1-2011/090685**
  **US-A1- 2006 030 499**

• **SINGH A ET AL: "Mechanism and challenges in commercialisation of algal biofuels", BIORESOURCE TECHNOLOGY, ELSEVIER BV, GB, vol. 102, no. 1, 1 January 2011 (2011-01-01), pages 26-34, XP027368454, ISSN: 0960-8524 [retrieved on 2010-07-06]**

EP 2 908 653 B1

**Description**

BACKGROUND OF THE INVENTION

1. Field of the Invention

This invention relates to dielectric fluids. In one aspect the invention relates to dielectric fluids comprising triglycerides of C18:1 fatty acids while in another aspect, the invention relates to dielectric fluids comprising triglycerides of C18:1 fatty acids in combination with C14:1 and/or C16:1 fatty acids.

2. Description of the Related Art

Vegetable oil (VO) based dielectric fluids, e.g., transformer fluids, have been increasingly used in the power generation industry to replace mineral oil (MO) based dielectric fluids because of their environmental friendliness and high flash point to improve safety of transformer operation. However, the VO-based dielectric fluids have significantly higher viscosity than the MO-based dielectric fluids, which results in a poorer heat transfer operation using a VO-based dielectric fluid. Therefore, a market need exists for a reduced viscosity VO-based dielectric fluid to improve the heat transfer efficiency in the transformer, while retaining the benefits of a high flash point combined with low melting point and low amounts of polyunsaturated fatty acids in the triglycerides.

Some of the conventional approaches to address this problem, and their associated disadvantages, include

1. Lowering the viscosity of VO-based dielectric fluid by blending it with lower viscosity fluids such as polyalphaolefins, synthetic polyol esters and polyglycerol fatty acid ester. However these approaches can lead to lowering of the flash point or to substituting with a non-natural based source;
2. Mixing the VO-based dielectric fluid with a diluent such as fatty acid alkyl ester, but this requires a diluent in excess of 10 weight percent (wt%) to reduce the viscosity of a canola oil to less than 33 centipoise (cP). However, this also results in lowering of the flash point;
3. Increasing the amount of unsaturation in the VO-based dielectric fluid lowers the viscosity of the fluid, but it also lowers the oxidation stability of the fluid (see USP 6,117,827); and
4. Increasing the amount of saturated C12-C16 triglycerides in the VO-based dielectric, but this also increases the melting point of the fluid.

Of continuing interest is a dielectric fluid that possesses a desired balance of properties, specifically a combination of low viscosity ($\leq$33 cP at 40°C, $\leq$120 cP at 10°C), high flash point ($\geq$260°C, preferably $\geq$270°C), and low melting point (-7°C or less).

SUMMARY OF THE INVENTION

In one embodiment the invention is a composition of triglycerides comprising in weight percent based on the weight of the composition:

A. 10 to 65% C18:1 fatty acids;
B. 35 to 90% of at least one of C 14:1 and C16:1 fatty acids;
C. No more than 12% polyunsaturated fatty acids; and
D. No more than 7% saturated fatty acids.

The triglyceride can comprise glycerol with any combination of the following fatty acids: C18:1, C14:1, C16:1, polyunsaturated fatty acids, and saturated fatty acids. The fatty acids can attach to the glycerol molecule in any order, e.g., any fatty acid can react with any of the hydroxyl groups of the glycerol molecule to form an ester linkage. The compositions of this invention are useful as dielectric fluids, and exhibit a (i) viscosity of less than or equal to ($\leq$)33 cP at 40°C and $\leq$120 cP at 10°C, (ii) flash point of greater than or equal to $\geq$260°C, preferably $\geq$270°C, and (iii) melting point of -7°C or less.

DETAILED DESCRIPTION OF THE PREFERRED EMBODIMENT

*Definitions*

Unless stated to the contrary, implicit from the context, or customary in the art, all parts and percents are based on weight and all test methods are current as of the filing date of this disclosure.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, temperature, is from 100 to 1,000, then all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, viscosity, temperature and the relative amounts of the individual components in the composition.

"Comprising", "including", "having" and like terms mean that the composition, process, etc. is not limited to the components, steps, etc. disclosed, but rather can include other, undisclosed components, steps, etc. In contrast, the term "consisting essentially of" excludes from the scope of any composition, process, etc. any other component, step etc. excepting those that are not essential to the performance, operability or the like of the composition, process, etc. The term "consisting of" excludes from a composition, process, etc., any component, step, etc. not specifically disclosed. The term "or", unless stated otherwise, refers to the disclosed members individually as well as in any combination.

"Dielectric fluid" and like terms mean a fluid, typically a liquid, that does not conduct, or conducts at a very low level, an electric current under normal circumstances. Vegetable oils inherently possess good dielectric properties (US 2006/0030499). For many vegetable oils the dielectric constant is less than 4.5.

"Viscosity" and like terms mean the resistance of a fluid which is being deformed by either sheer stress or tensile stress. For purposes of this specification, viscosity is measured at 40°C and 10°C using a Brookfield viscometer by the method of ASTM D-445.

"Flash point" and like terms mean the lowest temperature at which a volatile liquid can vaporize to form an ignitable mixture in air but will not continue to burn (compare to fire point). For purposes of this specification, flash point is measured by the method of ASTM D-3278.

"Fire point" and like terms mean the lowest temperature at which a volatile liquid can vaporize to form an ignitable mixture in air and will continue to burn after ignition. One accepted method for measuring the fire point of a liquid is ASTM D-92-12. The fire point of a liquid is typically 25-30°C greater than the flash point.

"Pour point" and like terms mean the lowest temperature at which a liquid becomes semi-solid and loses its flow characteristics, or in other words, the minimum temperature at which a liquid will flow. Pour point is typically measured by ASTM D-97.

"Melting point" and like terms mean the temperature at which a material changes state from solid to liquid. For purposes of this specification, melting point is measured using a differential scanning calorimeter (DSC) and the following protocol:

1. Equilibrate at 90.00°C,
2. Isothermal for 10 min,
3. Ramp 2.00°C/min to -90.00°C,
4. End of cycle 1,
5. Ramp 2.00°C/min to 90.00°C,
6. End of cycle 2,
7. Ramp 2.00°C/min to -90.00°C,
8. End of cycle 3, and
9. End of method.

The peak temperature of cycle 2 is reported as the melting point for the composition. Melting point correlates reasonably well with pour point.

"Triglyceride" and like terms mean an ester derived from glycerol and three fatty acids. The notation used in this specification to describe a triglyceride is the same as that used below to describe a fatty acid. The triglyceride can comprise glycerol with any combination of the following fatty acids: C18:1, C14:1, C16:1, polyunsaturated, and saturated. Fatty acids can attach to the glycerol molecule in any order, e.g., any fatty acid can react with any of the hydroxyl groups of the glycerol molecule for forming an ester linkage. Triglyceride of C 18:1 fatty acid simply means that the fatty acid components of the triglyceride are derived from or based upon a C 18:1 fatty acid. That is, a C 18:1 triglyceride is an ester of glycerol and three fatty acids of 18 carbon atoms each with each fatty acid having one double bond. Similarly, a C14:1 triglyceride is an ester of glycerol and three fatty acids of 14 carbon atoms each with each fatty acid having one double bond. Likewise, a C16:1 triglyceride is an ester of glycerol and three fatty acids of 16 carbon atoms each with each fatty acid having one double bond. Triglycerides of C18:1 fatty acids in combination with C14:1 and/or C16:1 fatty acids means that: (a) a C18:1 triglyceride is mixed with a C14:1 triglyceride or a C16:1 triglyceride or both; or (b) at least one of the fatty acid components of the triglyceride is derived from or based upon a C18:1 fatty acid, while the other two are derived from or based upon C14:1 fatty acid and/or C16:1 fatty acid.

"Fatty acid" and like terms mean a carboxylic acid with a long aliphatic tail that is either saturated or unsaturated. Unsaturated fatty acids have one or more double bonds between carbon atoms. Saturated fatty acids do not contain any double bonds. The notation used in this specification for describing a fatty acid includes the capital letter "C" for carbon atom, followed by a number describing the number of carbon atoms in the fatty acid, followed by a colon and another number for the number of double bonds in the fatty acid. For example, C16:1 denotes a fatty acid of 16 carbon atoms with one double bond, e.g., palmitoleic acid. The number after the colon in this notation neither designates the placement of the double bond(s) in the fatty acid nor whether the hydrogen atoms bonded to the carbon atoms of the double bond are cis to one another. Other examples of this notation include C18:0 (stearic acid), C18:1 (oleic acid), C18:2 (linoleic acid), C18:3 ($\alpha$-linolenic acid) and C20:4 (arachidonic acid).

*Compositions*

The first fatty acid component of the triglyceride compositions of this invention is a C18:1, i.e., it contains 18 carbon atoms and has one double bond. Representative C18:1 fatty acids include oleic acid and vaccenic acid, with oleic acid preferred. A C18:1 triglyceride can comprise glycerol with any combination of three C18:1 fatty acids, e.g., three oleic acids, or three vaccenic acids, or two oleic acids and one vaccenic acid, or one oleic acid and two vaccenic acids. The three C18:1 fatty acids can attach to the glycerol molecule in any order, e.g., any C18:1 fatty acid can react with any of the hydroxyl groups of the glycerol molecule to form an ester linkage. Typically, the C18:1 fatty acid of the triglyceride is oleic acid. The C18:1 triglyceride comprises 10 to 65 wt%, typically 10 to 60 wt% and more typically 10 to 55, wt% of the composition.

The second fatty acid component of the triglyceride compositions of this invention is at least one of a C14:1 or a C16:1. A C14:1 triglyceride is an ester of glycerol and three fatty acids of 14 carbon atoms each with each fatty acid having one double bond. Representative of the C 14:1 fatty acids is myristoleic acid, physeteric acid and tsuzuic acid. Like the C18:1 triglyceride, the C14:1 triglyceride can comprise glycerol with any combination of three C14:1 fatty acids, and the C14:1 fatty acid can attach to the glycerol molecule in any order. Typically, the C14:1 fatty acid is myristoleic acid.

A C16:1 triglyceride is an ester of glycerol and three fatty acids of 16 carbon atoms each and with each fatty acid having one double bond. Representative of the C16:1 fatty acids is palmitoleic acid. Like the C18:1 triglyceride, the C16:1 triglyceride can comprise glycerol with any combination of three C16:1 fatty acids, and the C16:1 fatty acids can attach to the glycerol molecule in any order. Typically, the C16:1 fatty acid is palmitoleic acid.

The second fatty acid component of the triglyceride composition can comprise 100% of either a C14:1 or a C16:1 or any combination of the two, e.g., 1-99 wt% of a C14:1 and 1-99 wt% of a C16:1. Typically, the second component is one or the other of a C14:1 or a C16:1, more typically 100% C16:1. The second fatty acid component comprises 35 to 90 wt%, typically 40 to 90 wt% and more typically 50 to 90, wt% of the composition.

The third fatty acid component of the compositions of this invention is optional but if present, it is a polyunsaturate of any carbon atom length, typically each of a length of at least 12 carbon atoms, with each fatty acid having more than one double bond. Like the C18:1 triglyceride, a polyunsaturated triglyceride can comprise glycerol with any combination of three polyunsaturated fatty acids, and the polyunsaturated fatty acids can attach to the glycerol molecule in any order. Representative polyunsaturated fatty acids from which the polyunsaturated triglyceride is made include, but are not limited to, linoleic acid (C18:2), $\alpha$-linolenic acid (C18:3), $\gamma$-linolenic acid (C18:3), eicosadienoic acid (C20:2), dihomo-$\gamma$-linolenic acid (C20:3), arachidonic acid (C22:4), docosapentaenoic acid (C22:5), hexadecatrienoic acid (C16:3), heneicosapentaenoic acid (C21:5), rumenic acid (C18:2), $\alpha$-calendic acid (C18:3), $\beta$-calendic acid (C18:3), $\alpha$-parinaric acid (C18:4), $\beta$-parinaric acid, pinolenic acid (C18:3), podocarpic acid (C20:3), and the like. In one embodiment the compositions of this invention are free or void of any polyunsaturated fatty acids. In one embodiment the third fatty acid component typically does not exceed 12 wt%, more typically it does not exceed 11 wt% and even more typically it does not exceed 10 wt%, of the composition.

The fourth fatty acid component of the compositions of this invention is optional but if present, it is saturated, i.e., an ester of glycerol and three fatty acids of any carbon atom length, typically each of a length of at least 8 carbon atoms, with each fatty acid free of any double bonds. Like the C18:1 triglyceride, the saturated triglycerides can comprise glycerol with any combination of three saturated fatty acids, and the saturated fatty acids can attach to the glycerol molecule in any order. Representative saturated fatty acids from which the saturated triglyceride is made include, but are not limited to, lauric acid (C12:0), myristic acid (C14:0), palmitic acid (C16:0) and stearic acid (C18:0). In one embodiment the compositions of this invention are free or void of any saturated fatty acids. In one embodiment the compositions of this invention contain no more than 7 wt%, typically no more than 5 wt% and more typically no more than 3 wt%, of saturated fatty acids.

In one embodiment the compositions of this invention can comprise one or more additives such as one or more antioxidants, metal deactivators, pour point depressants, UV-stabilizers, water scavengers, pigments, dyes, and the like. Useful additives for dielectric fluids are well known in the art, and these additives, if used at all, are used in known ways and in known amounts. Typically the additives in the aggregate do not exceed 3 wt%, more typically do not exceed 2 wt% and even more typically do not exceed 1 wt% of the composition.

In one embodiment the invention is a composition of triglycerides consisting essentially of:

    A. 10 to 65% C18:1 fatty acids;
    B. 35 to 90% of at least one of C14:1 and C16:1 fatty acids;
    C. No more than 12% polyunsaturated fatty acids; and
    D. No more than 7% saturated fatty acids.

This embodiment may contain one or more additives, e.g., antioxidant, metal deactivator, pigment, etc., but it specifically excludes any fatty acid other than those identified or those present in inconsequential amounts, e.g., less than 10 wt% based on the weight of the composition. These "other" fatty acids, if present, are typically by-products or contaminants remaining after the desired fatty acid, e.g., C18:1, is extracted from a natural source oil, e.g., corn oil, soy oil or the like. In other cases, the "other" fatty acids might be naturally present in the source oil.

In one embodiment the invention is a composition of triglycerides consisting essentially of in weight percent based on the weight of the composition:

    A. 10 to 65% C18:1 fatty acids; and
    B. 35 to 90% of at least one of C14:1 and C16:1 fatty acids.

This embodiment may contain one or more additives, e.g., antioxidant, pigment, etc., but it specifically excludes any fatty acid other than those identified or those present in inconsequential amounts, e.g., less than 10 wt% based on the weight of the composition. These "other" fatty acids, if present, are typically by-products or contaminants remaining after the desired triglyceride, e.g., C18:1, is extracted from a natural source oil, e.g., corn oil, soy oil or the like. In other cases, the "other" fatty acids might be naturally present in the source oil.

The triglycerides of the present invention may be obtained from vegetable and non-vegetable sources, e.g., algae oil, microbial oil, etc., with vegetable oils and algae oils the preferred natural source oils. Examples of triglycerides derived from natural source oils include, but are not limited to, those described in WO 2011/090685 and PCT/US2012/043973. These oils can be rich in one or more particular triglycerides, the particular triglyceride dependent upon the particular vegetable or algae oil. For example, corn and soy oils are typically rich in triglycerides in which the fatty acid component is derived from oleic acid. The triglycerides used in the practice of this invention may be extracted from the vegetable or other natural source oil by any one of a number of known methods, e.g., solvent extraction, mechanical extraction, etc. In other cases, the source oil (e.g., algae oil) might in its entirety comprise the compositions of triglycerides of this invention, without a need for further isolation or extraction.

The compositions of this invention are particularly useful as dielectric fluids in various electrical equipment, e.g., as an insulating oil in transformers. The compositions of this invention are environmentally friendly, e.g., biodegradable, and possess a unique balance of properties, specifically a unique balance of viscosity, flash point and melting point.

SPECIFIC EMBODIMENTS

The dynamic viscosity of a pure triglyceride may be obtained using a mathematical model based on the following factors:

    1. Dynamic viscosity of methyl ester of fatty acid (FAME) which constitutes the triglyceride molecule.
    2. Number of carbon atoms in the fatty acid chain of FAME.

$$\ln(\eta_{TAG}) = 0.5287 - 0.1542 * \eta_{FAME}1 - 0.1516 * \eta_{FAME}2 - 0.1542 * \eta_{FAME}3 - 1.5419$$
$$* \frac{1}{nCF_1} - 1.5158 * \frac{1}{nCF_2} - 1.5419 * \frac{1}{nCF_3} + 7.7064 * \frac{\eta_{FAME}1}{nCF_1} + 7.7188$$
$$* \frac{\eta_{FAME}2}{nCF_2} + 7.7064 * \frac{\eta_{FAME}3}{nCF_3}$$

Where

$\eta_{TAG}$ = viscosity of triglyceride in cP
$\eta_{FAME}1$ = viscosity of FAME present in the triglyceride at terminal position 1 in cP
$\eta_{FAME}2$ = viscosity of FAME present in the triglyceride at central position 2 in cP
$\eta_{FAME}3$ = viscosity of FAME present in the triglyceride at terminal position 3 in cP
$nCF_1$ = number of carbon atoms in the fatty acid chain of FAME at terminal position 1
$nCF_2$ = number of carbon atoms in the fatty acid chain of FAME at central position 2
$nCF_3$ = number of carbon atoms in the fatty acid chain of FAME at terminal position 3

The viscosity of triglyceride mixture can be estimated as

$$\ln \eta_{mix} = \sum_i w_i \cdot \ln \eta_i$$

$\eta_{mix}$ = viscosity of triglyceride mixture in cP.
$w_i$ = weight fraction of triglyceride 'i' in the triglyceride mixture.
$\eta_i$ = viscosity of triglyceride i in the mixture in cP.

The melting point of pure triglyceride may also be obtained using a mathematical model based on the following factors:

1. Melting points of FAME which constitute the triglyceride molecule
2. Number of carbon atoms in fatty acid chain of FAME.
3. A descriptor to account for the similarity between terminal fatty acid chains (*Terminal $_{Equal}$*).

$$
\begin{aligned}
MP_{TAG} = {} & -72.2053 + 0.3601 * MP_{FAME}1 + 0.4543 * MP_{FAME}2 + 0.3601 * MP_{FAME}3 \\
& + 578.4448 * \frac{1}{nCF_1} - 674.3624 * \frac{1}{nCF_2} + 578.4448 * \frac{1}{nCF_3} + 0.5813 \\
& * nCF_1 + 0.5813 * nCF_3 - 1.6560 * \frac{MP_{FAME}1}{nCF_1} - 1.6560 * \frac{MP_{FAME}3}{nCF_3} \\
& - 7.6588 * \frac{nCF_1}{nCF_2} - 7.6588 * \frac{nCF_3}{nCF_2} + 3.6244 * Terminal_{Equal} + 2.0464 \\
& * \frac{MP_{FAME}1}{nCF_2} + 2.0464 * \frac{MP_{FAME}3}{nCF_2}
\end{aligned}
$$

Where

$MP_{FAME}1$ = melting point of FAME present in the triglyceride at terminal position 1 in K
$MP_{FAME}2$ = melting point of FAME present in the triglyceride at central position 2 in K
$MP_{FAME}3$ = melting point of FAME present in the triglyceride at terminal position 3 in K
$nCF_1$ = number of carbon atoms in fatty acid chain of FAME at terminal position 1
$nCF_2$ = number of carbon atoms in fatty acid chain of FAME at central position 2
$nCF_3$ = number of carbon atoms in fatty acid chain of FAME at terminal position 3.
*Terminal $_{Equal}$* = 1 when the two terminal fatty acids fragments are the same or 0 when they are different.

The weight average melting point of triglyceride mixture can be estimated as

$$MP_{mix} = \sum_i w_i \cdot MP_i$$

$MP_{mix}$ = melting point of triglyceride mixture in K.
$w_i$ = weight fraction of triglyceride 'i' in the triglyceride mixture.

*MP$_i$ = melting point of triglyceride 'i' in triglyceride mixture in K.*

In all cases, the estimated (or predicted) weight average melting point is the same as that determined by DSC measurements or no more than 10°C greater.

A further correction to the average melting point model was made by including degree of isomorphism (ε). The degree of isomorphism accounts for structural dissimilarity present in triglyceride mixtures which may result in lowering of melting points. The procedure of calculating ε is described in Wesdorp, L. H. Liquid-multiple solid-phase equilibria in fats. Ph.D. Thesis, University Delft, The Netherlands, 1990. For cis-unsaturated fatty acid fragments, the overlapping volume was decided by the projected length of cis-unsaturated fragment on straight chain saturated fragment.

ε between different triglyceride pairs was calculated and the lowest of ε, min(ε), was used as a model descriptor. min(ε) is an indicator of maximum dissimilarity present in triglyceride mixtures. The epsilon model for melting point prediction is given as

$$\text{MP}_{\text{epsilon model}} = \text{MP}_{\text{mix}} + 24.89 * \min(\varepsilon) - 24.89 \qquad (0 \leq \min(\varepsilon) \leq 1)$$

In all cases, the estimated (or predicted) epsilon melting point is the same as that determined by DSC measurements or no more than 10°C greater.

The flash point of triglyceride or triglyceride mixtures may also be obtained using a mathematical model based on the heat of vaporization of pure triglyceride or triglyceride mixtures respectively.

$$\text{Flash Point(K)} = 45.004 \cdot \left[ \Delta H^{\text{vap}} \right]^{0.50197}$$

Where

Flash point = Flash point of triglyceride in K
$\Delta H^{\text{vAP}}$ = heat of vaporization of pure triglycerides or triglyceride mixtures in kJ/mol.

One of the representative methods to predict heat of vaporization of pure triglycerides is given in Chen et. al. (2010), Fragment-Based Approach for Estimating Thermophysical Properties of Fats and Vegetable Oils for Modeling Biodiesel Production Processes", Ind. Eng. Chem. Res. Vol.49, Pg. 876-886.
The heat of vaporization of triglyceride mixtures can be determined using the following relationship

$$\Delta H_{mix}{}^{vap} = \sum_i N_i \Delta H_i{}^{vap}$$

Where

$\Delta H^{\text{vap}}{}_{\text{mix}}$ = heat of vaporization of the triglyceride mixture in kJ/mol
$N_i$ = mole fraction of triglyceride i in the triglyceride mixture.
$\Delta H^{\text{vap}}{}_i$ = heat of vaporization of the triglyceride 'i' in kJ/mol

*Examples 1-13*

The compositions reported in Table 1 are based on models built to predict the following properties of triglycerides and mixtures of triglycerides: viscosity, flash point and melting point. All examples exhibit the desired balance of viscosity ≤33 cP at 40°C and ≤120 cP at 10°C, flash point ≥260°C, preferably ≥270°C, and melting point of -7°C or less. The predicted melting point range provides the upper and the lower limit of the melting point of the mixture. This is based on the highest and lowest predicted melting points of the individual components of the composition. The melting points of the mixtures are determined by the methods described above. Mixtures of triglycerides are highly interacting; hence the weight average is an approximate value of the melting point of the composition. The data on Example 2 show that the predicted weight-average and epsilon melting points are close to that determined experimentally by DSC.

Table 1 <u>Examples 1-13</u>

| Ex. # | C18:1 (wt%) | C18:2 (wt%) | C18:3 (wt%) | C16:1 (wt%) | C14:1 (wt%) | C18:0 (wt%) | Pred Visc(cP) (40 deg C) | Pred Vise (cP) (10 deg C) | Pred FlashPt (°C) | MP (DSC) (°C) | Pred MP Range (°C) | Pred MP (wt avg) (°C) | Pred MP Epsilon model (°C) |
|---|---|---|---|---|---|---|---|---|---|---|---|---|---|
| 1 | 30 | 4 | 1 | 65 | | | 28.05 | 102.42 | 309 | | -24<T<0.5 | -15.4 | -23.1 |
| 2 | 52.5 | | | 47.5 | | | 30.57 | 107.84 | 311 | -19 | -24<T<0.5 | -10.6 | -13.9 |
| 3 | 60 | | | | 40 | | 28.14 | 91.17 | 300 | | -29<T<0.5 | -11.3 | -19.0 |
| 4 | 30 | 4 | 1 | | 65 | | 22.8 | 73.37 | 288 | | -29<T<0.5 | -19.5 | -27.2 |
| 5 | 40 | | | 30 | 30 | | 26.8 | 92.44 | 300 | | -29<T<0.5 | -15.2 | -22.9 |
| 6 | 20 | | | 80 | | | 27.22 | 102.64 | 307 | | -24<T<0.5 | -17.7 | -21.0 |
| 7 | 15 | | | 85 | | | 26.7 | 101.84 | 306.8 | | -24<T<0.5 | -18.9 | -22.2 |
| 8 | 55 | 1 | | 44 | | | 30.8 | 107.96 | 312.1 | | -24<T<0.5 | -9.7 | -17.4 |
| 9 | 45 | 10 | | 45 | | | 29.6 | 103.84 | 312 | | -24<T<0.5 | -11.1 | -18.8 |
| 10 | 65 | | | 35 | | | 31.87 | 116.98 | 313.3 | | -24<T<0.5 | -7.5 | -10.8 |
| 11 | 10 | | | 90 | | | 26.2 | 101.04 | 306.2 | | -24<T<0.5 | -20 | -23.3 |
| | | | | | | | | | | | | | |
| Saturates | | | | | | | | | | | | | |
| 12 | 49 | 4.8 | 1.2 | | 40 | <5% | 29 | 98.20 | 299 | | -29<T<0.5 | -8.6 | -16.3 |
| 13 | 30 | 4 | 1 | 30 | 30 | <5% | 27.9 | 99.98 | 300 | | -29<T<0.5 | -12.4 | -20.1 |

*Comparative Examples 1-12*

In Table 2 Comparative Sample (CS) 1 to CS 8 are triglyceride compositions comprising varying amounts of diluents added to HOCO (High Oleic Canola Oil). The composition of HOCO is:

1. Triglyceride containing C18 mono-unsaturated fatty acid = 74 %
2. Triglyceride containing C18 di-unsaturated fatty acid = 14.5 %
3. Triglyceride containing C18 tri-unsaturated fatty acid = 4.5 %
4. Triglyceride containing C18 saturated fatty acid = 4 %
5. Triglyceride containing C16 saturated fatty acid = 3 %

Table 2 reports CS1-CS8 which are triglyceride compositions comprising HOCO with various amount of diluents. SE 1185D is soy fatty acid methyl ester (FAME), NYCOBASE SEH is dioctyl sebacate, and PAO 2.5 is polyalphaolefin.

Table 2

| | | | | | | CS1 to CS8 | | | | | |
|---|---|---|---|---|---|---|---|---|---|---|---|
| Concentration of Diluent in Mixture with HOCO | C18:1 triglyceride (wt%) | C18:2 Triglyceride (wt%) | C14:1 and/or C16:1 triglyceride (wt%) | Experimental Dynamic Viscosity cP @ 40°C | Experimental Dynamic Viscosity cP @ 10°C | Experimental Flash Point (°C) | Experimental Fire Point (°C) | Experimental Pour Point (°C) | Experimental Melting Point (°C) | Predicted Dynamic Viscosity cP @ 40°C | Predicted Flash Point (°C) |
| CS1 100 wt% Neobee 1053 | 0 | 0 | 0 | 13.8 | 50.1 | 250 | 284 | -9 | -4.4 | 14.7 | 222 (+/-3) |
| CS2 0 wt% diluent | 74 | 14.5 | 0 | 33.2 | 132.2 | 324 | 350 | -15 | -13.3 | 34.4 | 318 (+/- )3 |
| CS 3 75 wt% Neobee 1053 | 18.5 | 3.6 | 0 | 17.5 | 66.0 | 260 | 290 | -15 | -17.5 | 19.6 | 239 (+/-3) |
| CS4 100 wt% Nycobase SEH | 0 | 0 | 0 | 10.7 | 31.4 | 224 | 257 | -66 | | | |
| CS 5 15 wt% SEH | 62.9 | 12.3 | 0 | 29.4 | 104.5 | 282 | 302 | N/A | | | |
| CS6 25 wt% SEH | 55.5 | 10.9 | 0 | 26.4 | 90.9 | 266 | 288 | N/A | | | |
| CS 7 15wt% SE 1185D (soy FAME) | 62.9 | 12.3 | 0 | 24.1 | 78.1 | 236 | 256 | N/A | | | |
| CS 8 15 wt% PAO 2.5 | 62.9 | 12.3 | 0 | 26.8 | 92.7 | 234 | 250 | N/A | | | |

Table 3 <u>CS9 to CS12</u>

| Comparative Sample | C18:1 (wt%) | C18:2 (wt%) | C22:1 (wt%) | C16:1 (wt%) | C18:0 (wt%) | Pred Visc (cP) (40 deg C) | Pred Vise (cP) (10 deg C) | Pred Flash Point (°C) | MP (DSC) (°C) | Pred MP Range (°C) | Pred MP Weight Average (°C) | Pred MP Epsilon model (°C) |
|---|---|---|---|---|---|---|---|---|---|---|---|---|
| Higher viscosity and higher melting points | | | | | | | | | | | | |
| 9 | 75 | | | 25 | | 33 | 111.4 | 314.7 | | -24<T<0.5 | -5.2 | -8.5 |
| 10 | | | 40 | 60 | | >33 | >120 | >300 | | -24<T< 17.27 (MP of C22:1) | -6.5 | -16.5 |
| Higher melting points | | | | | | | | | | | | |
| Saturates | | | | | | | | | | | | |
| 11 | 75 | | | 21 | 4 | 35 | 120.2 | 315.5 | | -24<T<0.5 | -1.4 | -4.7 |
| 12 | 65 | | | 31 | 4 | 33.6 | 118.6 | 313.9 | | -24<T<0.5 | -3.7 | -7.0 |

The comparative samples with fatty acid compositions did not yield the desired combination of properties. In particular, CS 2 (HOCO: triglyceride with C18:1 > 70 %, triglyceride with C18:2 > 14 %, triglyceride with C18:3 < 3 %) has a viscosity at 40°C > 33 cP (with flash point > 300 deg C). CS3 to CS8 report compositions of HOCO with various diluents which do not yield the desired combination of properties.

CS9 to CS12 report the properties of triglyceride compositions comprising blends of C16:1 in various proportions with triglycerides of C18:1 fatty acids, and C22:1 fatty acids and/or C18:0 fatty acid which do not yield the desired combination of properties. In particular, CS11 and CS12 with C18:1> 65% have viscosity at 40°C > 33 cP with a flash point > 300°C.

## Claims

1.  A composition of triglycerides comprising in weight percent based on the weight of the composition:

    A. 10 to 65% C18:1 fatty acids;
    B. 35 to 90% of at least one of C14:1 and C16:1 fatty acids;
    C. No more than 12% polyunsaturated fatty acids; and
    D. No more than 7% saturated fatty acids.

2.  The composition of Claim 1 in which the saturated fatty acids are present in an amount of greater than zero to no more than 7 wt%.

3.  A composition of triglycerides consisting of, in weight percent based on the weight of the composition:

    A. 10 to 65% C18:1 fatty acids;
    B. 35 to 90% of at least one of C14:1 and C16:1 fatty acids;
    C. No more than 12% polyunsaturated fatty acids; and
    D. No more than 7% saturated fatty acids.

4.  A composition of triglycerides consisting of in weight percent based on the weight of the composition:

    A. 10 to 65% C18:1 fatty acids, and
    B. 35 to 90% of at least one of C14:1 and C16:1 fatty acids.

5.  An electrical device comprising the composition of Claim 1 as a dielectric fluid.

## Patentansprüche

1.  Eine Zusammensetzung von Triglyceriden, beinhaltend in Gewichtsprozent, bezogen auf das Gewicht der Zusammensetzung:

    A. zu 10 bis 65 % C18:1-Fettsäuren;
    B. zu 35 bis 90 % mindestens eines von C14:1- und C16:1-Fettsäuren;
    C. zu nicht mehr als 12 % mehrfach ungesättigte Fettsäuren; und
    D. zu nicht mehr als 7 % gesättigte Fettsäuren.

2.  Zusammensetzung gemäß Anspruch 1, wobei die gesättigten Fettsäuren in einer Menge von mehr als null bis nicht mehr als 7 Gew.-% vorhanden sind.

3.  Eine Zusammensetzung von Triglyceriden, bestehend aus, in Gewichtsprozent, bezogen auf das Gewicht der Zusammensetzung:

    A. zu 10 bis 65 % C18:1-Fettsäuren;
    B. zu 35 bis 90 % mindestens einem von C14:1- und C16:1-Fettsäuren;
    C. zu nicht mehr als 12 % mehrfach ungesättigten Fettsäuren; und
    D. zu nicht mehr als 7 % gesättigten Fettsäuren.

**4.** Eine Zusammensetzung von Triglyceriden, bestehend aus, in Gewichtsprozent, bezogen auf das Gewicht der Zusammensetzung:

    A. zu 10 bis 65 % C18:1-Fettsäuren und
    B. zu 35 bis 90 % mindestens einem von C14:1- und C16:1-Fettsäuren.

**5.** Eine elektrische Vorrichtung, beinhaltend die Zusammensetzung gemäß Anspruch 1 als dielektrisches Fluid.

**Revendications**

**1.** Une composition de triglycérides comprenant, en pourcentage massique rapporté au poids de la composition :

    A. de 10 à 65 % d'acides gras C18:1 ;
    B. de 35 à 90 % au moins d'acides gras C14:1 et C16:1 ;
    C. pas plus de 12 % d'acides gras polyinsaturés ; et
    D. pas plus de 7 % d'acides gras saturés.

**2.** La composition de la revendication 1 dans laquelle les acides gras saturés sont présents en une quantité supérieure à zéro et ne dépassant pas 7 % en poids.

**3.** Une composition de triglycérides constituée, en pourcentage massique rapporté au poids de la composition, de :

    A. 10 à 65 % d'acides gras C18:1 ;
    B. 35 à 90 % d'au moins soit des acides gras C14:1, soit des acides gras C16:1 ;
    C. pas plus de 12 % d'acides gras polyinsaturés ; et
    D. pas plus de 7 % d'acides gras saturés.

**4.** Une composition de triglycérides constituée, en pourcentage massique rapporté au poids de la composition, de :

    A. 10 à 65 % d'acides gras C18:1, et
    B. 35 à 90 % d'au moins soit des acides gras C14:1, soit des acides gras C16:1.

**5.** Un dispositif électrique comprenant la composition de la revendication 1 en tant que fluide diélectrique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6117827 A
- US 20060030499 A

- WO 2011090685 A
- US 2012043973 W


**Non-patent literature cited in the description**

- Liquid-multiple solid-phase equilibria in fats. **WESDORP, L. H.** Ph.D. Thesis. University Delft, 1990

- **CHEN.** Fragment-Based Approach for Estimating Thermophysical Properties of Fats and Vegetable Oils for Modeling Biodiesel Production Processes. *Ind. Eng. Chem. Res.,* 2010, vol. 49, 876-886